**Europäisches Patentamt**

**European Patent Office**

**Office européen des brevets**

(11) Veröffentlichungsnummer: **0 220 567 B1**

(12) **EUROPÄISCHE PATENTSCHRIFT**

(45) Veröffentlichungstag der Patentschrift: **22.04.92**

(21) Anmeldenummer: **86114006.9**

(22) Anmeldetag: **09.10.86**

(51) Int. Cl.⁵: **H01H 9/02**

(54) **Abdeckvorrichtung für Anschlussklemmen von Starkstromgeräten.**

(30) Priorität: **23.10.85 DE 3537600**

(43) Veröffentlichungstag der Anmeldung:
**06.05.87 Patentblatt 87/19**

(45) Bekanntmachung des Hinweises auf die
Patenterteilung:
**22.04.92 Patentblatt 92/17**

(84) Benannte Vertragsstaaten:
**AT BE DE FR GB IT SE**

(56) Entgegenhaltungen:
**EP-A- 0 051 755      DE-B- 2 914 507**
**DE-U- 7 501 663      DE-U- 8 335 104**
**FR-A- 2 503 927      US-A- 1 841 192**

(73) Patentinhaber: **Asea Brown Boveri Aktiengesellschaft
Kallstadter Strasse 1
W-6800 Mannheim-Käfertal(DE)**

(72) Erfinder: **Otte, Guenter, Busch Industrie
Jaeger Elektro Gmbh, Postfach 1280
Freisenberg, D-5880 Luedenscheid(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Abdeckvorrichtung gemäß dem Oberbegriff des Anspruchs 1.

Starkstromgeräte müssen gemäß einer Unfallverhütungsvorschrift der Berufsgenossenschaft berührungsgesicherte Klemmen haben. Im Stand der Technik sind verschiedene konstruktive Ausführungsformen von Klemmenabdeckungen bekannt. Die im Gerätegehäuse zwecks Leitungsanschluß vorgesehenen Anschlußklemmen sind üblicherweise zumindest auf einer Schmalseite des Gerätegehäuses durch angeformte Isolierkörper (z.B. Schutzkragen, Schutzstege) gegen Berührung geschützt (DE-GM 7 415 932). Teilweise werden Klemmenabdeckungen über die Ahschlußklemmen geschoben (DE-GM 8 208 759) oder aufgerastet (DE-OS 3 116 162, DE-PS 3 115 100, DE-AS 2 914 507).

Aus der DE-AS 2 914 507 ist eine ein U-Profil aufweisende sowie auf eine Anschlußklemme aufrastbare Klemmenabdeckung bekannt.

Nachteilig ist hierbei, daß das Aufrasten und insbesondere das nur mittels Werkzeug zu bewerkstelligende Abnehmen der Abdeckung zusätzliche Arbeit des Installateurs erfordert; zudem kann die Klemmenabdeckung verloren werden, da sie als vom Gerätegehäuse lösbares Teil ausgebildet ist. Die erfindungsgemäße Abdeckvorrichtung soll diese Nachteile vermeiden.

Aufgabe der Erfindung ist es, eine unverlierbare und einfach handhabbare Klemmenabdeckvorrichtung zu schaffen, die beim Anschluß der Starkstromleiter nicht im Wege ist.

Diese Aufgabe wird erfindungsgemäß durch die kennzeichnenden Merkmale des Patentanspruchs 1 gelöst. Danach ist die Schutzkappe schwenkbar, mittels im Gerätegehäuse geführter Lagerzapfen schwenkbar befestigt und in zwei Endstellungen, nämlich in einer die Klemmenschraube freigebenden und in einer die Klemmenschraube abdeckenden Endstellung verrastbar.

Vorteilhafte Ausführungen der Erfindung sind in den Unteransprüchen näher gekennzeichnet.

Durch die dauerhafte Befestigung der Abdeckvorrichtung am Gerätegehäuse wird deren möglicher Verlust verhindert. Die Ausbildung der Abdeckvorrichtung zu einer haubenartigen, U-förmig bzw. trapezförmig profilierten und einstückigen Schutzkappe gewährleistet einen ausreichenden Berührungsschutz. Zweckmäßig ist es auch, die Seitenwände der Schutzkappe derart zu profilieren, daß sie einerseits plan mit den Breitseiten des Gerätegehäuses abschließen, daß sie andererseits aber anhand einer Abschrägung über eine Schmalseite des Gerätegehäuses hinausragen. Hierdurch wird zum einen sicherheitserhöhend eine vorgelagerte Anstoßfläche geschaffen; zum anderen wird durch diese Maßnahme auch die Handhabung, insbesondere das Umklappen der Schutzkappe in die Montagestellung erleichtert. Soll z.B. an der Anschlußklemme eine Sammelschiene angebracht werden, kann die Schutzkappe durch einfachen Druck von unten auf die Abschrägung der Seitenwände aus der Betriebsstellung entrastet und in die Montagestellung geschwenkt werden, in der sie wiederum mittels einer Haltevorrichtung stabil gehalten wird. Soll die Schutzkappe nach erfolgter Montage auf die Klemmenschraube der Anschlußklemme aufgesetzt werden, geschieht dies unter Aufbietung geringer Zugkräfte durch einfaches Herunterschwenken der Schutzkappe. Vorteilhaft und sicherheitserhöhend ist hierbei auch, daß insbesondere beim Einbau des Starkstromgerätes in Verteilungen mit Geräteverblendungen (Hausinstallation) die Klemmenabdeckung sogar in die abdeckende Betriebsstellung umgeklappt werden muß, weil sich ansonsten die Geräteverblendung nicht aufsetzen ließe.

Anhand der Zeichnung, in der ein Ausführungsbeispiel der Erfindung dargestellt ist, soll die Erfindung näher erläutert und beschrieben werden.

Es zeigt:

Figur 1:     Eine Seitenansicht der Breitseite eines Leitungsschutzschalters mit der erfindungsgemäßen Abdeckvorrichtung in Montagestellung (A),

Figur 2:     eine Seitenansicht der Breitseite eines Leitungsschutzschalters mit der erfindungsgemäßen Abdeckvorrichtung in Betriebsstellung (B),

Figur 3:     eine Seitenansicht einer Schmalseite eines Leitungsschutzschalters mit der erfindungsgemäßen Abdeckvorrichtung in Betriebstellung (B),

Figur 4:     die Schutzkappe 2 der erfindungsgemäßen Abdeckungsvorrichtung in Draufsicht,

Figur 5:     die Schutzkappe 2 der erfindungsgemäßen Abdeckvorrichtung in Seitenansicht.

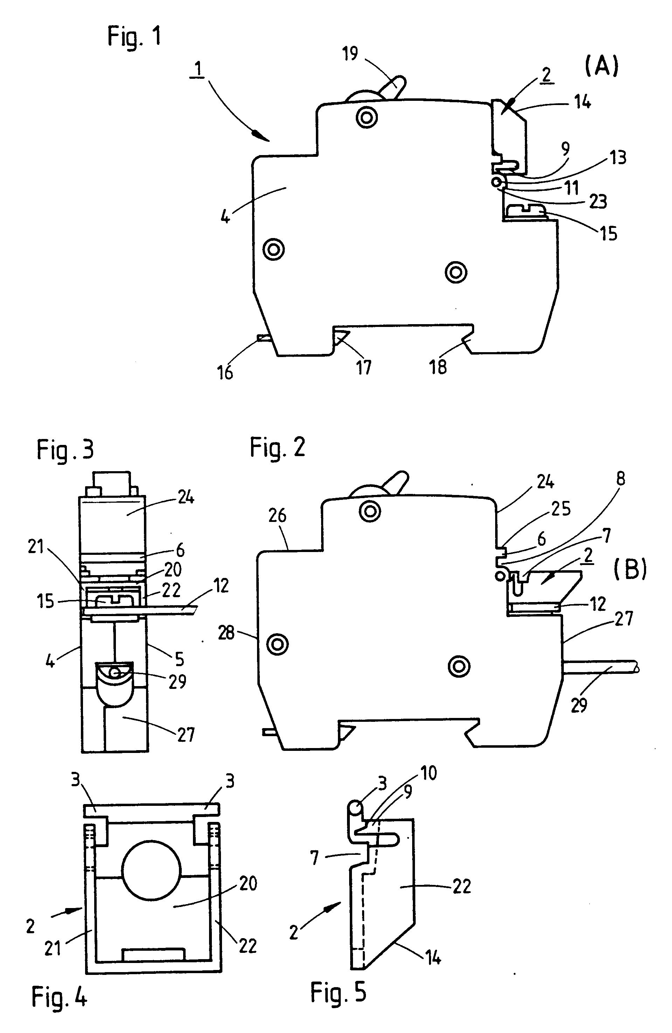

Figur 1 zeigt eine Seitenansicht des Gerätegehäuses 1 mit einem Schalthebel 19, einer Klemmenschraube 15 sowie einer Schutzkappe 2. Die Schutzkappe 2 befindet sich in Montagestellung A und gibt die Klemmenschraube 15 frei. Das Gerätegehäuse 1 kann an seiner Bodenfläche mittels des Schiebers 16, der verschiebbaren Nase 17 sowie der ortsfesten Nase 18 auf eine genormte Profilschiene aufgeschnappt werden. Zwischen und senkrecht zu den beiden Breitseiten 4,5 des Gerätegehäuses 1 wird die haubenartige Schutzkappe 2 mittels an ihrem Mittelteil 20 angeformter Lagerzapfen 3 in entsprechenden Lagerausnehmungen 13 der Breitseiten 4,5 des Gerätegehäuses 1 geführt. Hierbei ist die Schutzkappe 2 von einer Montagestellung A (Figur 1) in eine Betriebsstellung B (Figur 2) schwenkbar.

Ein Steg 6, welcher eine erste Anschlagfläche 25 für die bei Hausinstallationen üblichen Geräteverblendungen aufweist, wird in Montagestellung A von der im oberen Bereich der Schutzkappe 2 ausgebildeten Ausnehmung 7 unter Haftreibung aufgenommen. Zwei in den beiden Seitenteilen 21, 22 der Schutzkappe 2 eingeformte federnde Stege 9 werden in Montagestellung A federnd gegen die Lagerflansche 23 gedrückt und in den Zwischenräumen 8 eingeklemmt. Beide obige Maßnahmen tragen dazu bei, daß die Schutzkappe im aufgeklappten Zustand, d. h. in Montagestellung A sicher verbleibt.

Figur 2 zeigt ebenfalls eine Seitenansicht des Gerätegehäuses 1, wobei sich jedoch die erfindungsgemäße Abdeckvorrichtung in Betriebsstellung B befindet. Um die Klemmenschraube 15 gegen Berührung zu sichern, ist die Schutzkappe 2 in die Betriebsstellung B heruntergeklappt und mittels an den federnden Stegen 9 eingeformter Rastkanten 10 in Einkerbungen 11 der beiden Lagerflansche 23 sicher verrastet. Mittels der Klemmenschraube 15 der Anschlußklemme ist eine Sammelschiene 12 sowie ein Anschlußleiter 29 angeschlossen.

Figur 3 zeigt eine Seitenansicht einer Schmalseite des Gerätegehäuses 1. Die erfindungsgemäße Abdeckvorrichtung befindet sich hierbei in Betriebsstellung B, wobei die Schutzkappe 2 die Klemmenschraube 15 nach oben sowie seitlich abdeckt. Die Unterseite der Schutzkappe 2 liegt auf der Sammelschiene 12 bündig auf. Der Steg 6 ist an einer für die Anbringung einer Geräteverblendung vorgesehenen oberhalb der Klemmenschraube 15 liegenden Anlagefläche 24 einer ersten Schmalseite 27 angeformt. Die Anlagefläche 24 ist derart ausgebildet, daß sie parallel zur Führungsrichtung der Klemmenschraube 15 fluchtet. Eine am Steg 6 ausgebildete erste Anschlagfläche 25 sowie eine hierzu höhengleich an der zweiten Schmalseite 28 des Gerätegehäuses 1 ausgebildete zweite Anschlagfläche 26 sind für den Anschlag einer Geräteverblendung vorgesehen.

Figur 4 und Figur 5 zeigen die Schutzkappe 2 in Aufsicht bzw. in Seitenansicht. Die Lagerzapfen 3 sind seitlich symmetrisch am Mittelteil 20 der Schutzkappe 2 derart angeformt, daß die Kreisflächen an den freien Enden der Zapfen in einer Ebene mit den Außenflächen der Seitenteile 21, 22 liegen. Die Seitenteile 21, 22 weisen eine Abschrägung 14 auf, wodurch sich ein trapezförmiger Zuschnitt ergibt.

## Bezugszeichenliste

1    Gerätegehäuse

2    Schutzkappe
3    Lagerzapfen
4    1. Breitseite des Gerätegehäuses 1
5    2. Breitseite des Gerätegehäuses 1
6    Steg
7    Ausnehmung
8    Zwischenräume
9    federnde Stege
10    Rastkanten
11    Einkerbungen
12    Sammelschiene
13    Lagerausnehmungen
14    Abschrägung d. Seitenteile 21,22
15    Klemmenschraube
16    Schieber
17    Verschiebbare Nase
18    Ortsfeste Nase
19    Schalthebel
20    Mittelteil d. Schutzkappe 2
21    1. Seitenteil der Schutzkappe 2
22    2. Seitenteil der Schutzkappe 2
23    Lagerflansche
24    Anlagefläche f. eine Geräteverblendung
25    1. Anschlagfläche d. Geräteverblendung
26    2. Anschlagfläche d. Geräteverblendung
27    1. Schmalseite des Gerätegehäuses 1
28    2. Schmalsiete des Gerätegehäuses 1
29    Anschlußleiter

## Patentansprüche

1.   Abdeckung für Anschlußklemmen an Starkstromgeräten, wie Leitungsschutzschalter, deren Gerätegehäuse (1) vorzugsweise in Schmalbauweise ausgeführt sind, mit einer die Klemmenschraube (15) der Anschlußklemme abdeckenden Schutzkappe (2), dadurch gekennzeichnet, daß die Schutzkappe (2) mittels im Gerätegehäuse (1) geführter Lagerzapfen (13) schwenkbar befestigt ist und in zwei Endstellungen, nämlich in einer die Klemmenschraube (15) freigebenden und in einer die Klemmenschraube (15) abdeckenden Endstellung verrastbar ist.

2.   Abdeckvorrichtung nach Anspruch 1, dadurch gekennzeichnet, daß die Schutzkappe (2) aus thermoplastischem Isolierstoff besteht und im Querschnitt U-förmig sowie in Seitenansicht trapezförmig derart profiliert ist, daß ihr Mittelteil (20) die Klemmenschraube (15) oberhalb und das jeweilige Seitenteil (21,22) die Klemmenschraube (15) seitlich abdeckt und daß an den Seitenteilen (21,22) eine Abschrägung (14) derart ausgebildet ist, daß sowohl die Seitenteile (21,22) als auch das Mittelteil (20) über eine erste Schmalseite (27) des Gerätegehäuses (1) hinausragen.

3. Abdeckvorrichtung nach Anspruch 2, dadurch gekennzeichnet, daß die Schutzkappe (2) mittels zweier am Mittelteil (20) vorzugsweise materialeinheitlich angeformter Lagerzapfen (3), die eine senkrecht auf den Breitseiten (4,5) des Gerätegehäuses (1) stehende Schwenkachse bilden, in entsprechenden Lagerausnehmungen (13) befestigt ist.

4. Abdeckvorrichtung nach Anspruch 1 bis Anspruch 3, dadurch gekennzeichnet, daß die Haltevorrichtung (6,7,8,9) eine an der Schutzkappe (2) ausgesparte Ausnehmung (7), welche einem am Gerätegehäuse (1) angeformten Steg (6) unter Haftreibung umfaßt, sowie zwei in die Zwischenräume (8) zwischen dem Steg (6) und den beiden Lagerflanschen (23) einfedernde Stege (9) aufweist.

5. Abdeckvorrichtung nach Anspruch 1 bis Anspruch 3, dadurch gekennzeichnet, daß die Rastvorrichtung (10,11) Rastkanten (10), welche an federnden in die Seitenteile (21,22) eingeformten Stegen (9) ausgebildet sind, sowie Einkerbungen (11) der Lagerflansche (23) aufweist, wobei die Rastkanten (10) in die Einkerbungen (11) einrastbar sind.

6. Abdeckvorrichtung nach Anspruch 4, dadurch gekennzeichnet, daß der Steg (6) an einer für die Anbringung einer Geräteverblendung vorgesehenen oberhalb der Klemmenschraube (15) liegenden Anlagefläche (24) angeformt ist, wobei die Anlagefläche (24) auf einer ersten Schmalseite (27) des Gerätegehäuses (1) derart ausgebildet ist, daß sie parallel zur Führungsrichtung der Klemmenschraube (15) fluchtet, und daß eine für den Anschlag der Geräteverblendung vorgesehene erste Anschlagfläche (25) des Stegs (6) höhengleich mit einer auf der zweiten Schmalseite (28) des Gerätegehäuses (1) ausgebildeten Anschlagfläche (26) verläuft.

**Claims**

1. Cover for connecting terminals on heavy current apparatuses, such as line protection circuit breakers, whose apparatus housings (1) are preferably constructed in a narrow design, having a protective cap (2) covering the terminal screw (15) of the connecting terminal, characterised in that the protective cap (2) is mounted in a pivotable manner by means of journals (13) (sic) guided in the apparatus housing (1), and can be latched in two limit positions, namely in a limit position giving access to the terminal screw (15) and in a limit position covering the terminal screw (15).

2. Covering device according to Claim 1, characterised in that the protective cap (2) consists of a thermoplastic dielectric material and is of U-shaped cross-section as well as having a trapezoidally profiled side elevation, such that its centre part (20) covers the terminal screw (15) at the top and the respective side part (21,22) covers the terminal screw (15) at the side, and in that a chamfer (14) is constructed on the side parts (21,22) such that both the side parts (21,22) and the centre part (20) project over a first narrow side (27) of the apparatus housing (1).

3. Covering device according to Claim 2, characterised in that the protective cap (2) is mounted in suitable bearing recesses (13) by means of two journals (3) integrally formed on the centre part (20), preferably in the same material, which journals (3) form a pivoting axle at right angles to the broad sides (4,5) of the apparatus housing (1).

4. Covering device according to Claim 1 to Claim 3, characterised in that the retaining device (6,7,8,9) has a recess (7), which is hollowed out on the protective cap (2) and grips, by static friction, a web (6) integrally formed on the apparatus housing (1) and two webs (9), which are sprung into the intermediate spaces (8) between the web (6) and the two bearing flanges (23).

5. Covering device according to Claim 1 to Claim 3, characterised in that the latching device (10,11) has latching edges (10), which are constructed on webs (9) formed in a sprung manner in the side parts (21,22), and notches (11) of the bearing flanges (23), the latching edges (10) being able to latch in the notches (11).

6. Covering device according to Claim 4, characterised in that the web (6) is integrally formed on a contact surface (24), which is provided for the fitment of an apparatus facing and is located above the terminal screw (15), the contact surface (24) being constructed on a first narrow side (27) of the apparatus housing (1) such that it is aligned parallel to the guiding direction of the terminal screw (15), and in that a first stop surface (25) of the web (6), provided for stopping the apparatus facing, runs at the same height with a stop surface (26) which is constructed on the second narrow side (28) of the apparatus housing (1).

## Revendications

1. Organe de recouvrement pour bornes de raccordement sur des appareils à courant fort tels que des disjoncteurs de protection de ligne dont les boîtiers (1) sont réalisés de préférence sous une forme étroite, comportant une coiffe protectrice (2) recouvrant la vis de serrage (15) de la borne de raccordement, caractérisé par le fait que la coiffe protectrice (2) est fixée avec possiblité de pivotement au moyen de tourillons (13) guidés dans le boîtier (1) de l'appareil, et peut être verrouillée-enclenchée dons deux positions extrêmes, à savoir dons une position extrême dans laquelle la vis de serrage (15) est découverte et dans une position extrême dans laquelle la vis de serrage (15) est recouverte.

2. Organe de recouvrement selon revendication 1, caractérisé par le fait que la coiffe protectrice (2) est en matière isolante thermoplastique et possède en coupe transversale un profil en forme de U et en élévation latérale un profil trapézoïdal, de manière que sa partie médiane (20) recouvre la vis de serrage (15) par le dessus et que sa partie latérale concernée (21, 22) recouvre latéralement la vis de serrage (15), et par le fait qu'un chanfrein (14) est aménogé sur les parties latérales (21, 22) de manière que ces parties latérales (21, 22) tout aussi bien que la partie médiane (20) débordent au-delà d'un premier côté étroit (27) du boîtier (1) de l'appareil.

3. Organe de recouvrement selon revendication 2, caractérisé par le fait que la coiffe protectrice (2) est fixée dans des logements-paliers correspondants (13) au moyen de deux tourillons (3) formés sur la partie médiane (20), de préférence d'un seul tenant avec celle-ci, ces tourillons constituant un axe de pivotement perpendiculaire aux côtés larges (4, 5) du boîtier (1) de l'appareil.

4. Organe de recouvrement selon revendications 1 à 3, caractérisé par le fait que le dispositif de maintien (6, 7, 8, 9) présente un évidement (7) qui est aménagé dans la coiffe protectrice (2) et s'engage avec frottement sur une barrette (6) formée sur le boîtier (1) de l'appareil, et présente deux barrettes (9) s'engageant avec déformation élastique dans les intervalles (8) entre la barrette (6) et les deux flasques de palier (23).

5. Organe de recouvrement selon revendications 1 à 3, caractérisé par le fait que le dispositif de verrouillage-enclenchement (10, 11) présente des arêtes d'enclenchement (10) qui sont aménagées sur des barrettes (9) déformables élastiquement formées dans les parties latérales (21, 22), et présente des encoches (11) dans les flasques de palier (23), les arêtes d'enclenchement (10) pouvant s'enclencher dans les encoches (11).

6. Organe de recouvrement selon revendication 4, caractérisé par le fait que la barrette (6) est formée sur une surface de contact (24) située au-dessus de la vis de serrage (15) et prévue pour la mise en place d'un cache de l'appareil, cette surface de contact (24) étant aménagée sur un premier côté étroit (27) du boitier (1) de l'appareil, de manière telle qu'elle soit en condition de parallélisme et d'alignement par rapport à la direction de passage de la vis de serrage (15), et par le fait qu'une première surface de butée (25) de la barrette (6), prévue pour la butée du cache de l'appareil, s'étend à la même hauteur qu'une surface de butée (26) aménagée sur le deuxième côté étroit (28) du boîtier (1) de l'appareil.

Fig. 1

(A)

Fig. 3

Fig. 2

(B)

Fig. 4

Fig. 5